# EUROPÄISCHE PATENTSCHRIFT

(11) **EP 1 378 157 B1**
(45) Veröffentlichungstag und Bekanntmachung des Hinweises auf die Patenterteilung: **12.08.2009**
(21) Anmeldenummer: 03013936.4
(22) Anmeldetag: 20.06.2003
(51) Int. Cl.: A01D 34/86

(54) **Mäh- und/oder Schneidgerät**
Mowing and/or cutting device
Dispositif pour faucher et/ou couper

(30) Priorität: 19.06.2002 DE 10227261
(43) Veröffentlichungstag der Anmeldung: 07.01.2004
(73) Patentinhaber: Gerhard Dücker GmbH & Co. KG Landmaschinenfabrik, 48703 Stadtlohn (DE)
(72) Erfinder: Dücker, Gerhard, 48703 Stadlohn (DE)
(74) Vertreter: Busse, Harald F.W.

(56) Entgegenhaltungen:
- FR-A- 1 422 254
- GB-A- 1 467 896
- GB-A- 2 129 265
- GB-A- 2 202 122
- US-A- 3 949 539
- US-B1- 6 192 665

## Beschreibung

Die Erfindung betrifft ein Mäh- und/oder Schneidgerät mit einem schwenkbar an einem Ausleger halterbaren Mähkopf nach dem Oberbegriff des Anspruchs 1 bzw. des Anspruchs 3.

Bei derartigen Mäh- und/oder Schneidgeräten ist es bekannt, den Ausleger von einem Fahrzeug aus seitlich ausgreifen zu lassen, wobei die Schwenkachse für den daran gehaltenen Mähkopf in Fahrtrichtung des Mäh- und/oder Schneidgeräts weist. Durch die Schwenkbeweglichkeit des Mähkopfes kann dieser beispielsweise in Horizontalstellung für einen parallel zu einer Straße liegenden Rasenstreifen ebenso wie für schräg aufwärts oder - etwa in Straßengräben - schräg abwärts weisenden Böschungen eingesetzt werden. Es ist je nach zur Verfügung stehendem Schwenkhebel auch möglich, den Mähkopf vertikal zu stellen, um dadurch etwa Hecken zu schneiden.

Bei bekannten Mäh- und/oder Schneidgeräten ist der Mähkopf an einem parallel zu diesem erstreckten Schwenkhebel starr gehalten.

Dieser Schwenkhebel führt zu der Schwenkachse und stellt so die Schwenkverbindung mit dem Ausleger her. Zur Bewirkung der Schwenkbewegung um die Schwenkachse ist ein Lenkgestänge vorgesehen, das von einem parallel zum Ausleger liegenden Hydraulikzylinder beweglich ist. Das Lenkgestänge ist gebildet durch ein erstes Lenkerpaar, das im Nahbereich der Schwenkachse an gegenüberliegenden Seiten des Schwenkhebels angelenkt ist, und durch ein zweites Lenkerpaar, das an gegenüberliegenden Seiten des Auslegers angelenkt ist. Die Anlenkachsen dieser Lenkerpaare an dem Ausleger bzw. an dem Schwenkhebel liegen parallel zur Schwenkachse des Schwenkhebels des Mähkopfs um den Ausleger. Beide Lenkerpaare sind mit ihren freien, von der jeweiligen Anlenkung abweisenden Enden an einer Verbindungsachse miteinander schwenkbar verbunden. An dieser Verbindungsachse greift auch die Kolbenstange des Hydraulikzylinders an.

Der Gesamtschwenkwinkel des Mähkopfes um den Ausleger ist somit begrenzt. Einerseits können das Ende des Auslegers und der Schwenkhebel für den Mähkopf nicht parallel aufeinander gelegt werden, da das Lenkergestänge einen zu kleinen Zwischenwinkel durch seine eigene Erstreckung blockiert. Andererseits kann auch ein Ausschwenken der genannten Teile über einen Winkel von deutlich mehr als 200° nicht durchgeführt werden, da ansonsten die Verbindungsachse des Lenkergestänges nicht mehr von dem Hydraulikzylinder erreicht werden kann. Ein solcher großer Schwenkwinkel ist jedoch wünschenswert, wenn etwa auch Ober- oder Rückseiten von neben der Straße stehenden Hecken geschnitten werden sollen.

Zudem variiert während der Schwenkbewegung der Abstand der Verbindungsachse zur Schwenkachse, somit der Hebelarm für den Angriff des Hydraulikzylinders. Das Drehmoment für die Schwenkbewegung ist daher über den Schwenkwinkel nicht konstant. Die Geschwindigkeit der Schwenkbewegung variiert je nach Schwenkwinkel und Schwenkrichtung.

Die US 6 192 665 B1 zeigt ein Mähgerät, bei dem der Mähkopf am vorderen Ende eines Auslegers gestängefrei gehalten ist. Der Mähkopf ist dabei um das Auslegerende über einen Kettentrieb schwenkbar, allerdings jeweils nur so weit, bis er an den Ausleger anschlägt. Dieser Schwenkwinkel ist sehr gering. Zudem ist durch Kettenlängung im Dauerbetrieb nicht gewährleistet, daß eine Gleichartigkeit beider Schwenkrichtungen des Mähkopfes realisiert werden kann. Vielmehr wird dieser immer Spiel dahingehend haben, daß er von seiner eigenen Gewichtskraft nach unten gezogen wird und dadurch den Kettentrieb einseitig spannt und damit noch weiter längt.

Die GB 1 467 896 A zeigt einen einzelne Hydraulikzylinder für das Verschwenkten eines Mähkopfes, wobei der Zylinder je nach Schwenkrichtung im Ein- oder Ausfahrsinn kraftbeaufschlagt und daher für ein Halten eines eingestellten Winkels kraftfrei geschaltet sein muß. Damit ergibt sich aber gerade die Problematik eines großen Spiels des schweren Mähkopfes um seine Schwenkachse.

Der Erfindung liegt das Problem zugrunde, hier eine Verbesserung zu erreichen und die Bewegung des Mähkopfes um den Ausleger zu optimierten.

Die Erfindung löst dieses Problem durch ein Mäh- und/oder Schneidgerät mit den Merkmalen des Anspruchs 1 sowie mit den Merkmalen des Anspruchs 3, die einzeln oder besonders günstig in Kombination miteinander verwirklicht sein können. Hinsichtlich vorteilhafter Ausgestaltungen wird auf die abhängigen Ansprüche 2 und 4 bis 14 verwiesen.

Erfindungsgemäß ist mit der Gestängefreiheit der zur Verfügung stehende Schwenkwinkel vergrößert. Eine Blockade der Schwenkbewegung durch ein Lenkgestänge ist über den gesamten Schwenkweg verhindert. Dabei sichert die mechanisch gleichartige Ausbildung für beide Schwenkrichtungen eine gleichmäßige Bewegungsgeometrie und -geschwindigkeit für beide Schwenkrichtungen. Dabei kann eine Spiegelsymmetrie zu einer die Schwenkachse für den Mähkopf umfassenden Ebene eine vollständige Gleichwertigkeit beider Schwenkrichtungen sicherstellen. Etwa können zwei parallele Hydraulikzylinder vorgesehen sein, die für jedes Verschwenken jeweils über ein Zugglied auf einen die Schwenkachse umgebenden Rotationskörper einwirken. Da die Bewegungsebene des Mähkopfes vor oder hinter der Bewegungsebene des Auslegers liegt, kann der Mähkopf kollisionsfrei um den Ausleger verschwenkt werden, wodurch eine 360°-Drehung um diesen möglich wird.

Damit kann beispielsweise eine die Erstreckungsbreite des Mäh- und/oder Schneidgeräts eng begrenzende Transportstellung eingehalten sein, wenn in Transportstellung der Mähkopf im wesentlichen vertikal steht und daher seine Langerstreckung hochkant weist. Zur Vermeidung einer Verletzungsgefahr können dabei die Schlag- oder Schneidmittel des Mähkopfes einer vertikalen Fahrzeuglängsmittelebene zugewandt sein.

Dennoch kann auch aus dieser Stellung heraus eine um 180° gewendete Stellung des Mähkopfes eingestellt werden, so daß dann die nach außen weisenden Schlag- oder Schneidmittel einer Wartung sehr einfach zugänglich sind.

Mit dem besonders vorteilhaft verwirklichten Verzicht auf einen Schwenkhebel kann über den gesamten Schwenkwinkel das gleiche Drehmoment verwirklicht sein, da es keine über den Schwenkwinkel variierende wirksame Hebellänge gibt.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Heckansicht eines erfindungsgemäßen Mäh- und/oder Schneidgeräts, das hier ein Fahrzeug umfaßt, an dessen Heck die Mähvorrichtung angeordnet ist, in einer nahe beim Fahrzeug liegenden horizontalen Arbeitsstellung des Mähkopfes,
- Fig. 2: eine Mähvorrichtung in Stellung nach Fig. 1 in vom Fahrzeug gelöster Abbildung,

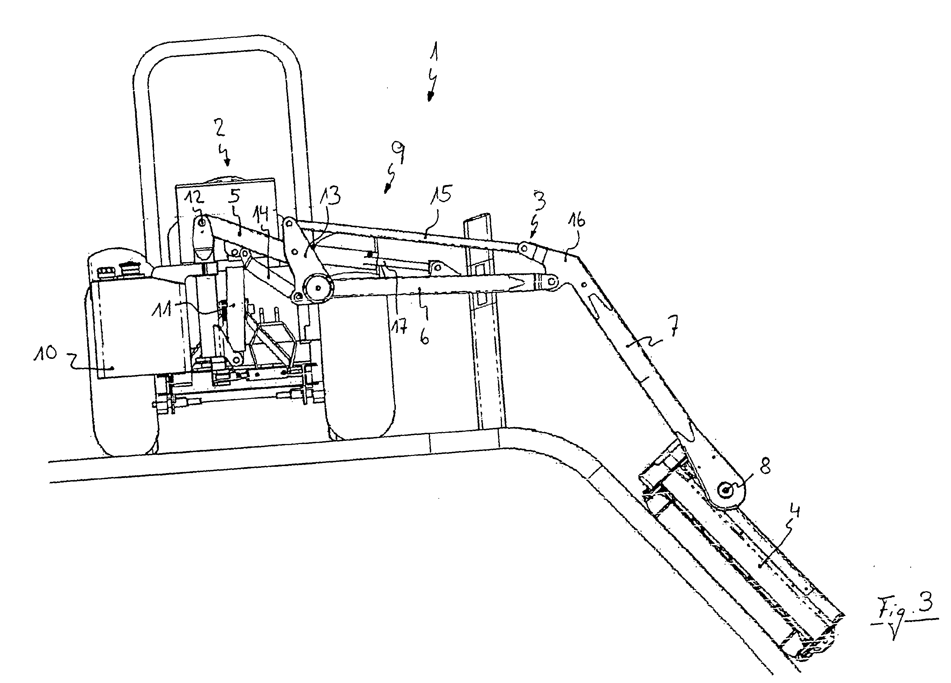

- Fig. 3: eine ähnliche Ansicht wie Fig. 1 mit einer ausgreifenden Schrägstellung des Mähkopfes an einer abwärts geneigten Böschung,

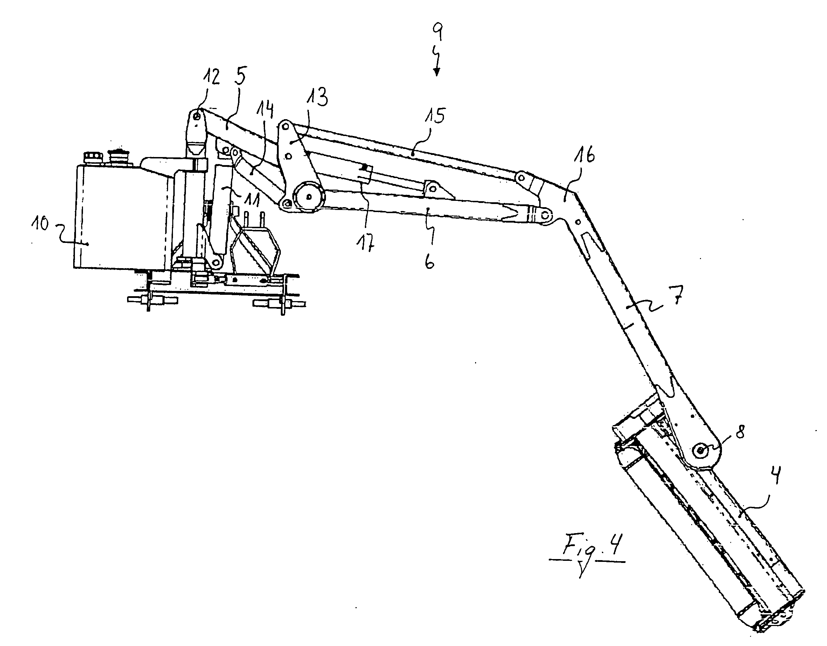

- Fig. 4: die Mähvorrichtung in Stellung nach Fig. 3 in vom Fahrzeug gelöster Abbildung,

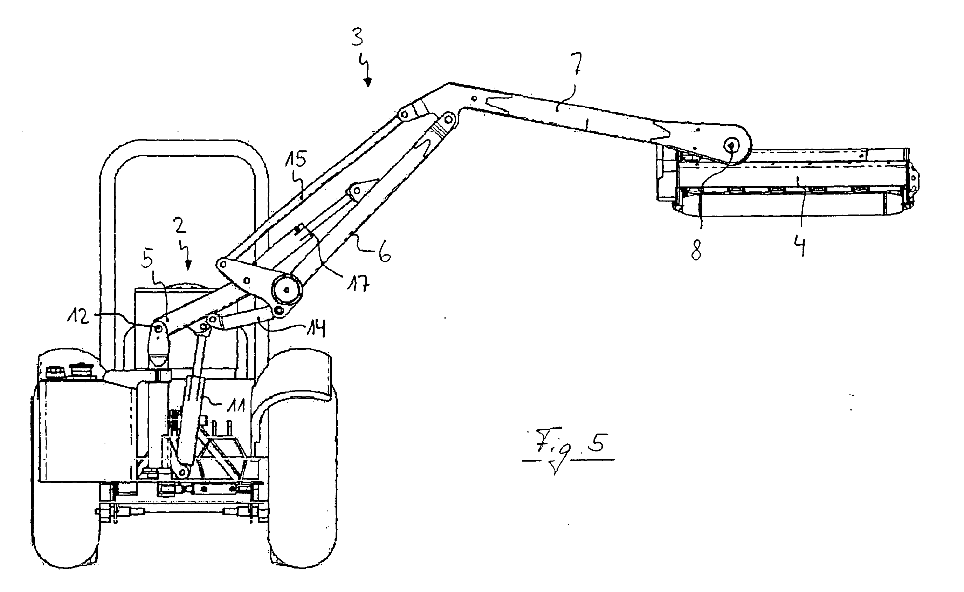

- Fig. 5: eine schematische Heckansicht des Mäh- und/oder Schneidgeräts in einer vom Fahrzeug ausgreifenden und aufwärts verlagerten Horizontalstellung des Mähkopfes, etwa um eine Hecke oberseitig zu schneiden,

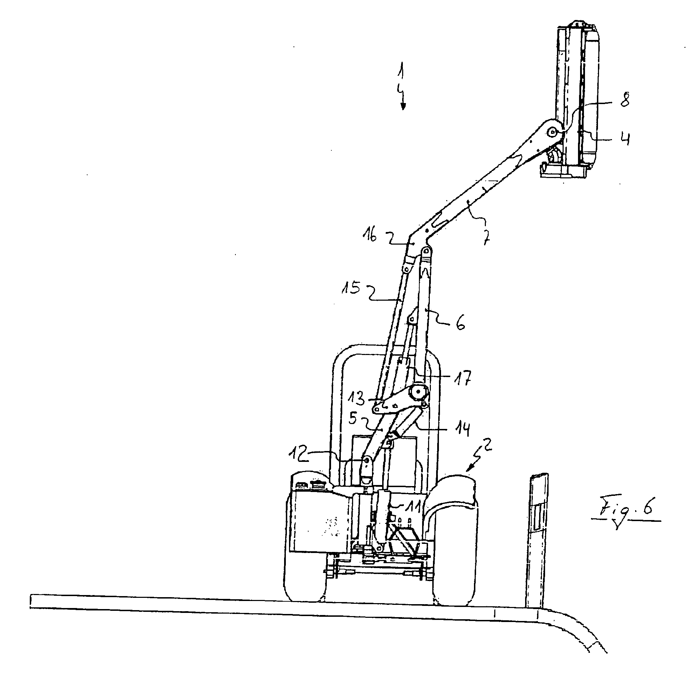

- Fig. 6: eine ähnliche Ansicht wie Fig. 5 mit einem allerdings vertikal stehenden Mähkopf, etwa um ein Lichtprofil in Baumkronen oder Hecken zu schneiden,
- Fig. 7: das Mäh- und/oder Schneidgerät in Stellung nach Fig. 6 in Ansicht von oben,

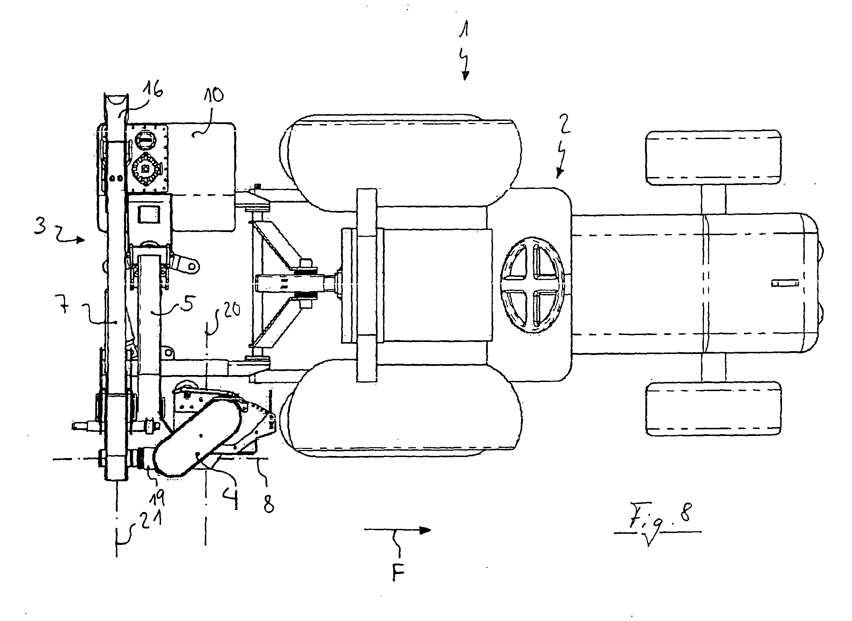

- Fig. 8: das Mäh- und/oder Schneidgerät in Transportstellung mit nahe beim Fahrzeug vertikal stehendem Mähkopf in Ansicht von oben,

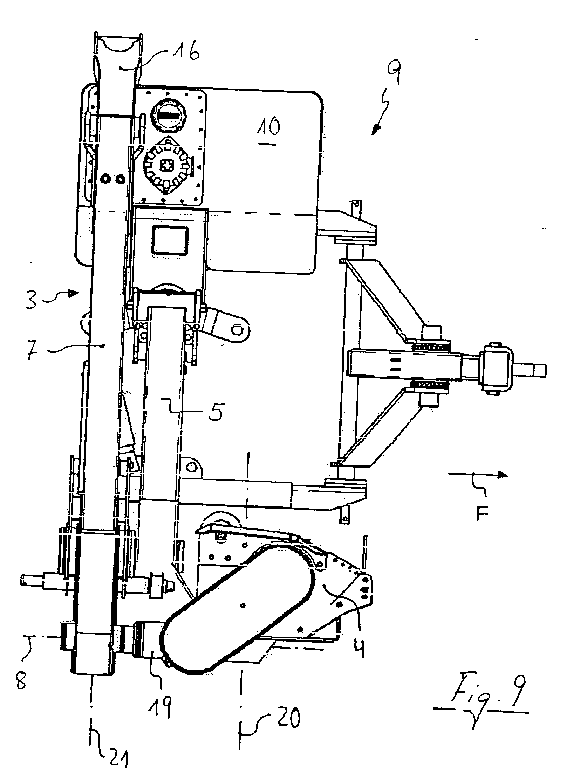

- Fig. 9: die Mähvorrichtung in Stellung nach Fig. 8 in Abbildung ohne das Fahrzeug,
- Fig. 10: den äußeren Auslegerarm mit daran angelenktem Mähkopf in einer schräg einwärts weisenden Stellung des Mähkopfes in Ansicht von hinten,
- Fig. 11: den äußeren Auslegerarm mit daran angelenktem Mähkopf in Stellung nach Fig. 10 in Ansicht von oben,
- Fig. 12: den äußeren Auslegerarm mit daranangelenktem Mähkopf in einer schräg auswärts und aufwärts weisenden Stellung des Mähkopfes in Ansicht von hinten,
- Fig. 13: den äußeren Auslegerarm mit daran angelenktem Mähkopf in Stellung nach Fig. 12 in Ansicht von oben,
- Fig. 14: den äußeren Auslegerarm mit daran angelenktem Mähkopf in einer horizontalen, die Schneidmittel aufwärts positionierenden Stellung des Mähkopfes in Ansicht von hinten,
- Fig. 15: den äußeren Auslegerarm mit daran angelenktem Mähkopf in Stellung nach Fig. 14 in Ansicht von oben,
- Fig. 16: eine schematische Ansicht der im äußeren Auslegerarm angeordneten Teile mit daran gehaltenem Mähkopf in Vertikalstellung des Mähkopfes,
- Fig. 17: eine ähnliche Darstellung wie Fig. 16 in teilweise verschwenkter Stellung des Mähkopfes,
- Fig. 18: eine ähnliche Darstellung wie Fig. 16 mit demgegenüber um weitere 270° verschwenkter Stellung des Mähkopfes,

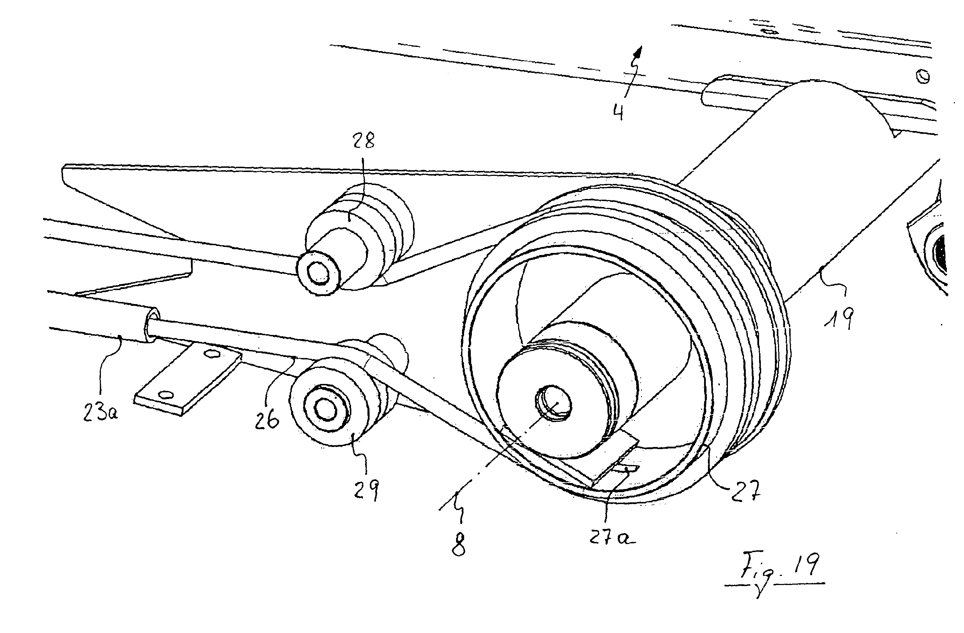

- Fig. 19: das Detail XIX in Ansicht von oben,
- Fig. 20: das Detail nach Fig. 19 in Ansicht von oben,
- Fig. 21: das Mäh- und/oder Schneidgerät in perspektivischer Ansicht von schräg hinten in Transportstellung des Mähkopfes,

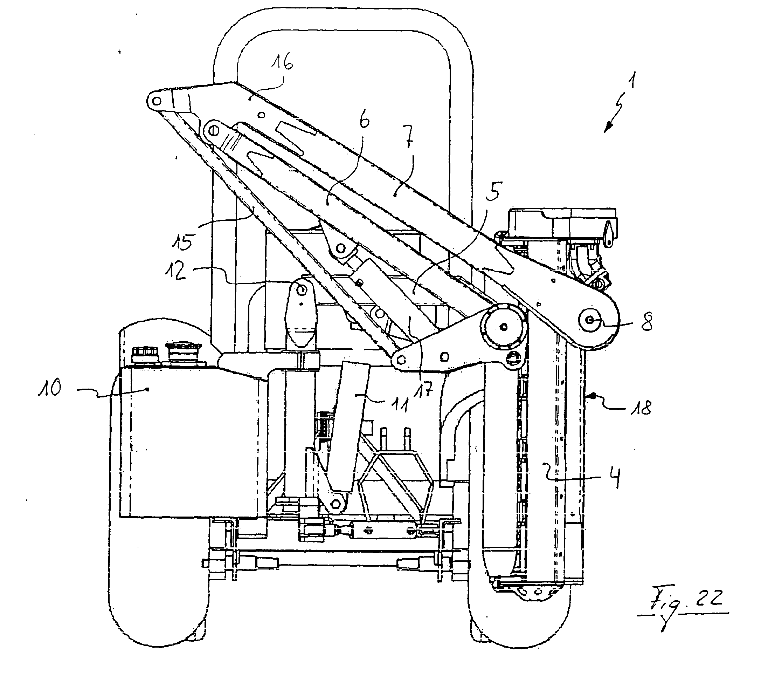

- Fig. 22: das Mäh- und/oder Schneidgerät in Ansicht von hinten während des Aufschwenkens des Auslegers bei vertikaler Halterung des Mähkopfes,
- Fig. 23: das Mäh- und/oder Schneidgerät in Ansicht von hinten bei weiter fortschreitender Öffnung des Auslegers und Horizontalverschwenkung des Mähkopfes,
- Fig. 24: eine schematische Ansicht der Hydraulik für die im Ausleger befindlichen Zylinder in weit eingeschwenkter Stellung des Mähkopfes,
- Fig. 25: eine ähnliche Ansicht wie Fig. 24 mit gegenüber der dort gezeigten Stellung um 270° auswärts verschwenkter Stellung des Mähkopfes,
- Fig. 26: eine ähnliche Ansicht wie Fig. 25 mit schwimmend gehaltenem Mähkopf,
- Fig. 27: eine ähnliche Ansicht wie Fig. 26 mit einer Druckmittelbeaufschlagung beider Kolben zum Spannen des Zugseils,
- Fig. 28: eine ähnliche Ansicht wie Fig. 27 mit aktiver Überlastsicherung zur Druckmittelabfuhr bei Verschwenken des Mähkopfes unter ein Hindernis,
- Fig. 29: eine ähnliche Ansicht wie Fig. 28 mit einer in gegensinniger Richtung aktiven Überlastsicherung.

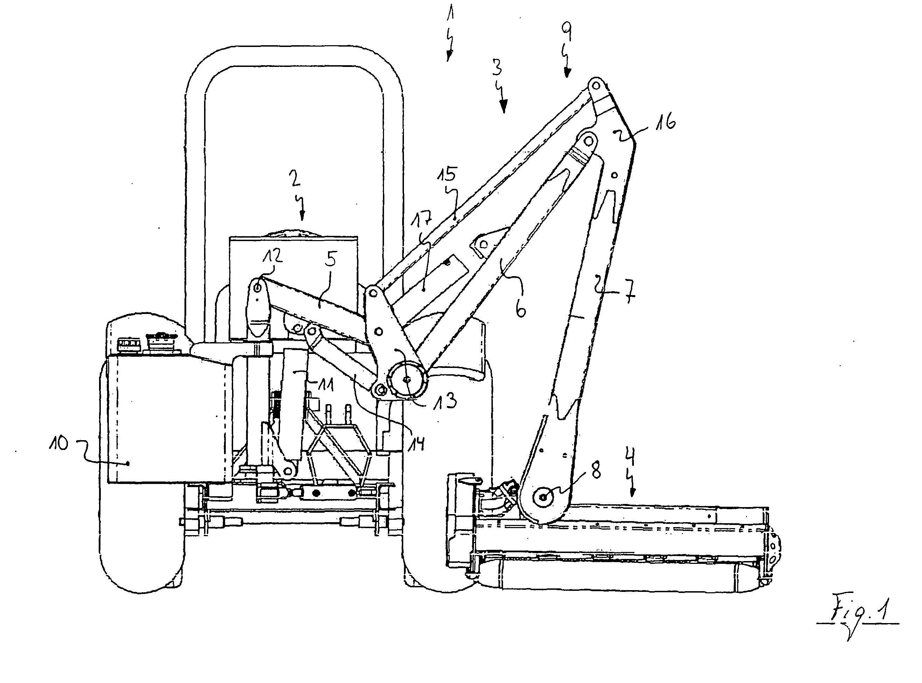

Das in Figur 1 dargestellte und insgesamt mit 1 bezeichnete Mäh- und/oder Schneidgerät umfaßt ein selbstfahrendes Fahrzeug2, was nicht zwingend ist, einen mehrteiligen Ausleger 3 und einen Mähkopf 4. Der Ausleger 3 ist im Ausführungsbeispiel dreigliedrig ausgebildet und umfaßt einen ersten, kurzen Arm 5, einen daran angelenkten mittleren Arm 6 und einen daran angelenkten äußeren Arm 7. Auch andere Konstellationen und Ausgestaltungen des Auslegers 3 sind möglich. In jedem Fall ist ein äußerer Arm 7 des Auslegers 3 schwenkbeweglich mit dem Mähkopf 4 verbunden. Die Verbindung umfaßt eine Schwenkachse 8, die im gezeichneten Ausführungsbeispiel parallel zur Fahrtrichtung F des Fahrzeugs 2 verläuft. Das Fahrzeug 2 ist als Schmalspurtraktor ausgebildet, um damit einen flexiblen Einsatz auch in engen Bereichen zu ermöglichen. Auch größere Fahrzeuge sind möglich.

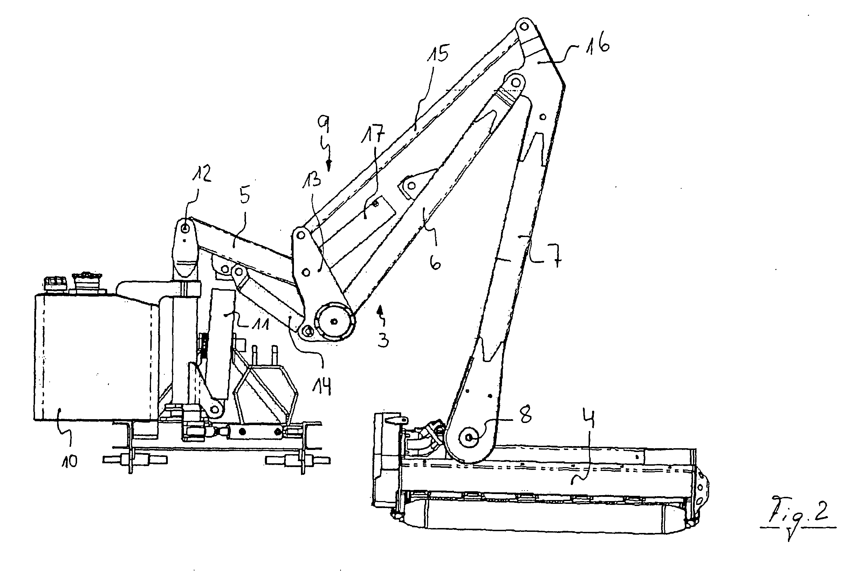

Die Einheit aus Ausleger 3 und Mähkopf 4 ist im weiteren als Mähvorrichtung 9 bezeichnet. Wie in Fig. 2 sichtbar ist, ist diese insgesamt vom Fahrzeug 2 demontierbar und an dieses in verschiedenen Positionen ankoppelbar, beispielsweise sowohl an eine hintere als auch an eine vordere Dreipunktkupplung ansetzbar. Auch kann die Ausrichtung variiert und damit die Arbeitsposition des Mähkopfes 4 von rechts auf links gewechselt werden. Als Gegengewicht für den Mähkopf 4 kann ein Tank 10, der Bestandteil der Mähvorrichtung 9 sein kann, dienen.

Es versteht sich, daß der Mähkopf 4 mit Schneid- und/oder Schlagmitteln versehen sein kann und austauschbar ist, so daß auch eine reine Heckenschere oder dergleichen montierbar ist. Auch kann der Mähkopf mehrere vertikal oder horizontal rotierende Schneid- oder Schlagwalzen enthalten. Alle diese Ausbildungen sind hier als Mähkopf 4 bezeichnet. Im folgenden wird zur Vereinfachung auch das Mäh- und/oder Schneidgerät 1 als Mähgerät 1 bezeichnet.

Im Ausführungsbeispiel ist der erste Arm 5 über einen nahezu vertikal stehenden Hydraulikzylinder 11 um das Gelenk 12 schwenkbar. Die Verbindungsgelenkanordnung 13 zwischen dem ersten und zweiten Arm 5, 6 ist über einen zweiten Hydraulikzylinder 14 zu bewegen, dem Arm 6 ist eine Parallelstange 15 zugeordnet, wobei diese und der Arm 6 sich von der Verbindungsgelenkanordnung 13 zu der Gelenkanordnung 16, die den mittleren Arm 6 und die Parallelstange 15 mit dem äußeren Arm 7 verbindet, erstrecken. Durch den mittleren Arm 6 und die Parallelstange 15 ist mit den Gelenkanordnungen 13 und 16 ein Gelenkparallelogramm gebildet, das durch einen dritten Hydraulikzylinder 17 bewegt werden kann. Die Gestaltung des Auslegers 3 ist hinsichtlich der Anzahl seiner Glieder und deren Ausgestaltung variabel.

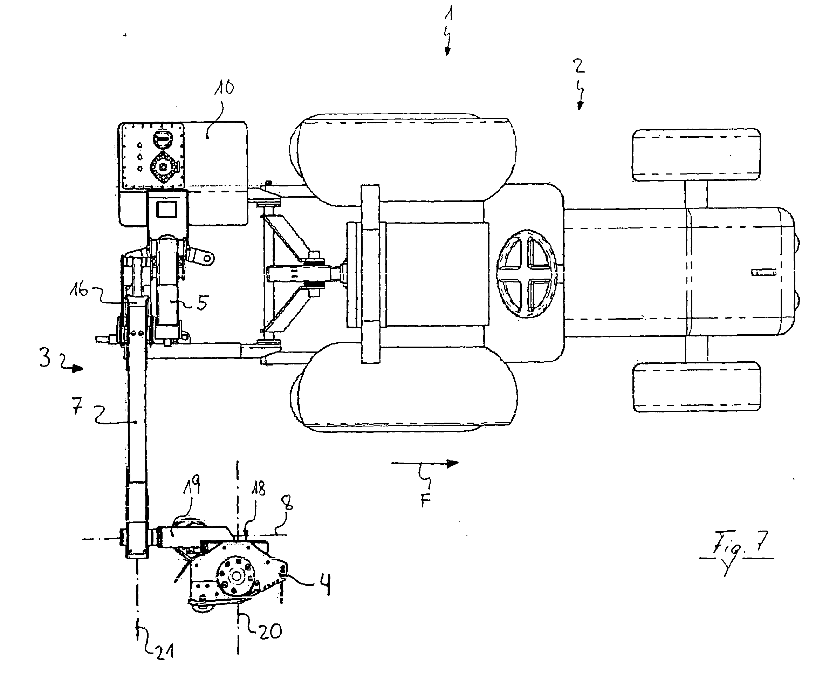

Der Mähkopf 4 ist an dem äußeren Arm 7 angelenkt und um die Achse 8 drehbar. Die Anlenkung ist derart direkt, daß ein Schwenkhebel, der sich radial von der Schwenkachse 8 zum Mähkopf 4 erstrecken würde, entbehrlich ist. Vielmehr erstreckt sich vom in horizontaler Stellung oberen Randbereich 18 des Mähkopfes 4 in Fahrtrichtung ein die Schwenkachse 8 umgreifendes Rohrstück 19. Die Rotationsebene 20 des Mähkopfes 4 ist damit von der Schwenkebene 21 des äußeren Arms 7 in Fahrtrichtung F beabstandet. Wie beispielsweise in Fig. 7 deutlich wird, liegt die Rotationsebene 20 im Ausführungsbeispiel in Fahrtrichtung F vor der Bewegungsebene 21 des Arms 7. Eine Kollision zwischen den genannten Teilen ist damit auch bei einer Drehung des Mähkopfes 4 von 360° oder mehr gegenüber dem Arm 7 ausgeschlossen.

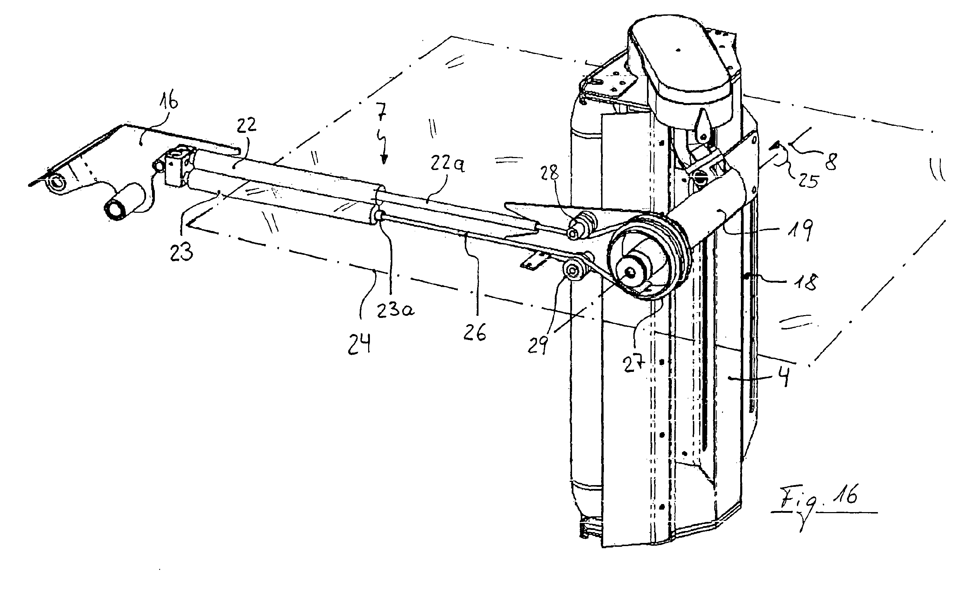

Wie in den Figuren 16 ff. sichtbar ist, umfaßt der Arm 7 zwei übereinander liegende Antriebsorgane 22, 23, die bezüglich einer Spiegelebene 24 symmetrisch sind. In der Spiegelebene liegt auch die Schwenkachse 8 für die Bewegung des Mähkopfes 4 um den Arm 7. Durch die Spiegelsymmetrie bezüglich der Ebene 24 sind beide Schwenkrichtungen des Mähkopfes 4 gleichwertig und mit gleicher Geschwindigkeit durchzuführen.

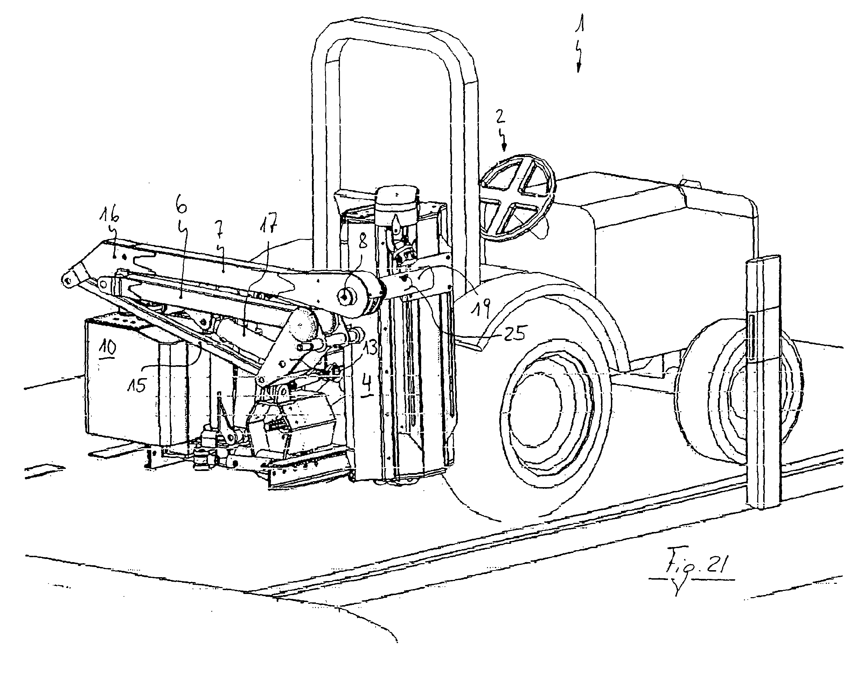

In Figur 16 ist eine vertikale Stellung des Mähkopfes 4 gezeigt, bei der dessen in Betrieb obere Kante 18 nach außen weist, die Schneid- und/oder Schlagmittel daher geschützt nach innen weisen. Eine solche Stellung des Mähkopfes 4, in der dieser rechtwinklig zum Arm 7 steht, kann eine Transportstellung, wie in Figur 21 gezeigt ist, bilden. Dabei ist eine sehr geringe Breite der Mähvorrichtung 9 ausgebildet. Auch etwa ein Schmalspurschlepper kann daher in erfindungsgemäßer Weise ausgebildet sein, ohne daß dessen Spur seitlich von der Mähvorrichtung 9 überragt würde.

Die rechtwinklige, einwärts weisende Stellung des Mähkopfes 4 gegenüber dem Arm 7 kann eine Extremstellung ausbilden, von der aus der Mähkopf 4 nur in Richtung des Pfeils 25 auswärts verschwenkt werden kann. Dies ist allerdings nicht zwingen. Im Ausführungsbeispiel ist in der Stellung nach Figur 16 das obere Antriebsorgan 22 nahezu voll ausgefahren.

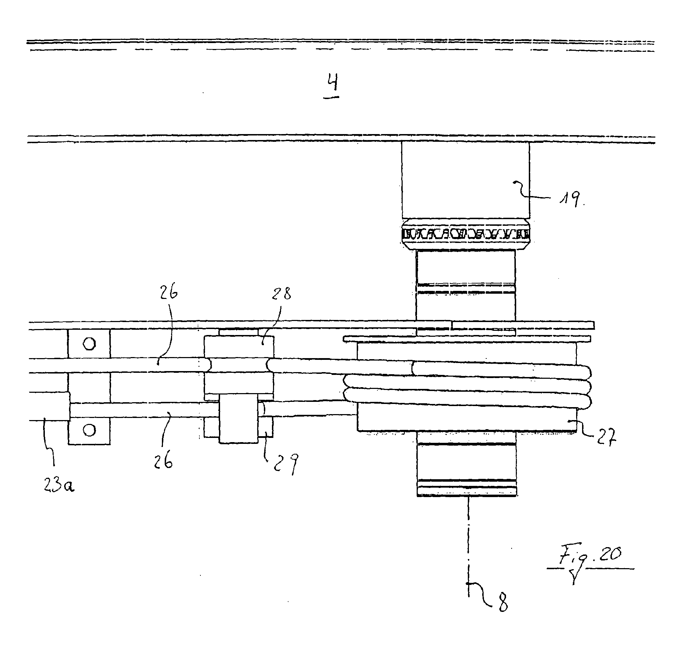

Die Antriebsorgane 22, 23 sind hier als Hydraulikzylinder ausgebildet, wobei die Kolbenstangen 22a, 23a mit einem Zugseil 26 verbunden sind. Das Zugseil 26 kann insbesondere ein Stahlseil sein. Dieses umläuft einen Rotationskörper 27, der die Schwenkachse 8 fest umgreift, mit zwei vollen Windungen (sh. Fig. 20). Zur Umlenkung des Zugseils 26 sind zusätzlich zwei Spannrollen 28, 29 vorgesehen. Über das Zugseil 26 ist daher eine Rotationsbewegung des Mähkopfes 4 um die Schwenkachse 8 bewirkbar. Um Schlupf zu vermeiden, ist auf das Zugseil 26 ein Mitnehmer aufgepreßt, der in eine komplementäre Ausnehmung 27a in einer Seilführung innerhalb des Rotationskörpers 27 formschlüssig eingreift.

Durch Einfahren der Kolbenstange 22a wird auf das Seil 26 in seinem oberen Bereich eine Zugkraft ausgeübt, wodurch der Rotationskörper 27 - und mit ihm der Mähkopf 4 - um die Schwenkachse 8 in Richtung des Pfeils 25 verschwenkt wird.

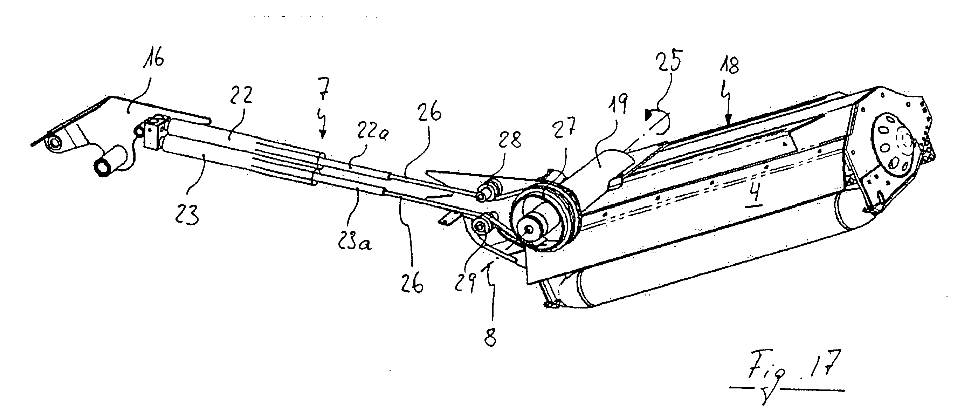

In Fig. 17 ist der Winkel zwischen dem Arm 7 und dem Mähkopf 4 auf etwa 220° von etwa 90° in Figur 16 geöffnet worden. Dabei fährt die Kolbenstange 23a aus. Die in Figur 17 gezeigte Stellung mit etwa gleichweit ausgefahrenen Kolbenstangen 22a und 23a stellt somit eine Mittelstellung dar. Durch weiteres Einfahren der Kolbenstange 22a wird der Mähkopf 4 weiter in Richtung des Pfeils 25 um die Schwenkachse 8 verschwenkt.

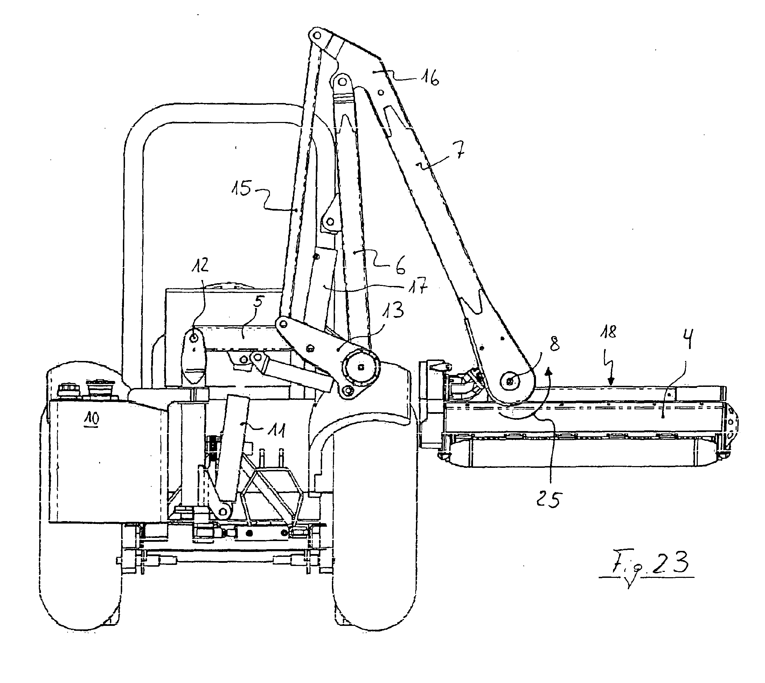

Der Übergang von Figur 16 zu Figur 17 entspricht auch in etwa dem Aufschwenken des Mähkopfes während des Übergangs von der Transportstellung nach Figur 21 in die horizontale Stellung nach Figur 23.

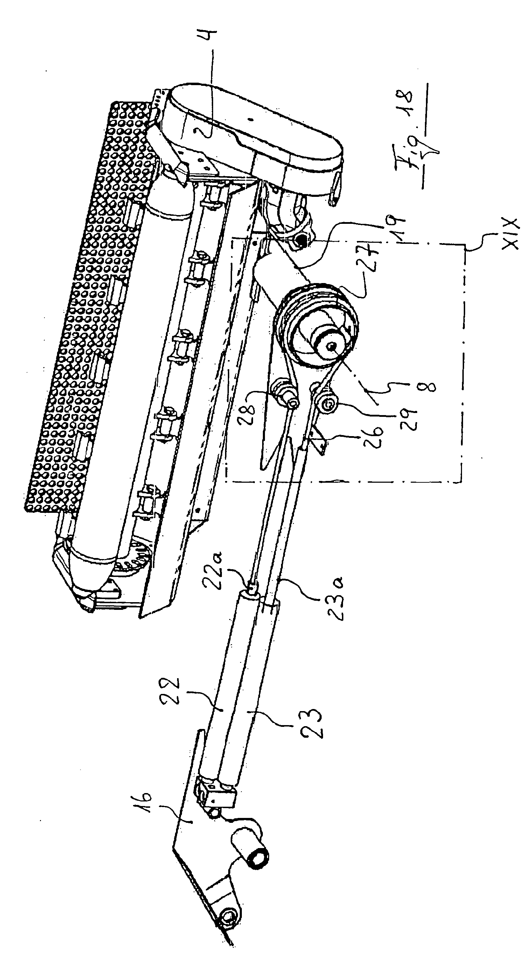

In Figur 18 beträgt der Winkel zwischen Mähkopf 4 und Arm 7 360°, sie liegen also parallel. Gegenüber der Stellung nach Figur 16 wurde somit der Mähkopf 4 um insgesamt 270° verschwenkt. Eine nach oben oder bei vertikaler Stellung des Mähkopfes 4 nach außen weisende Orientierung der Schneid- und/oder Schlagmittel erleichtert deren Wartung und Reinigung. Die Kolbenstange 22a ist dann nahezu vollständig eingefahren. Auch ein noch größerer Drehwinkel ist je nach Zylinderhub und Durchmesser des Rotationskörpers 27 möglich, für die meisten Einsatzzwecke jedoch nicht erforderlich. Aufgrund der Gestängefreihcit und der voreinanderliegenden Bewegungsebenen 20 und 21 ist theoretisch sogar eine Drehung über den Vollkreis hinaus möglich.

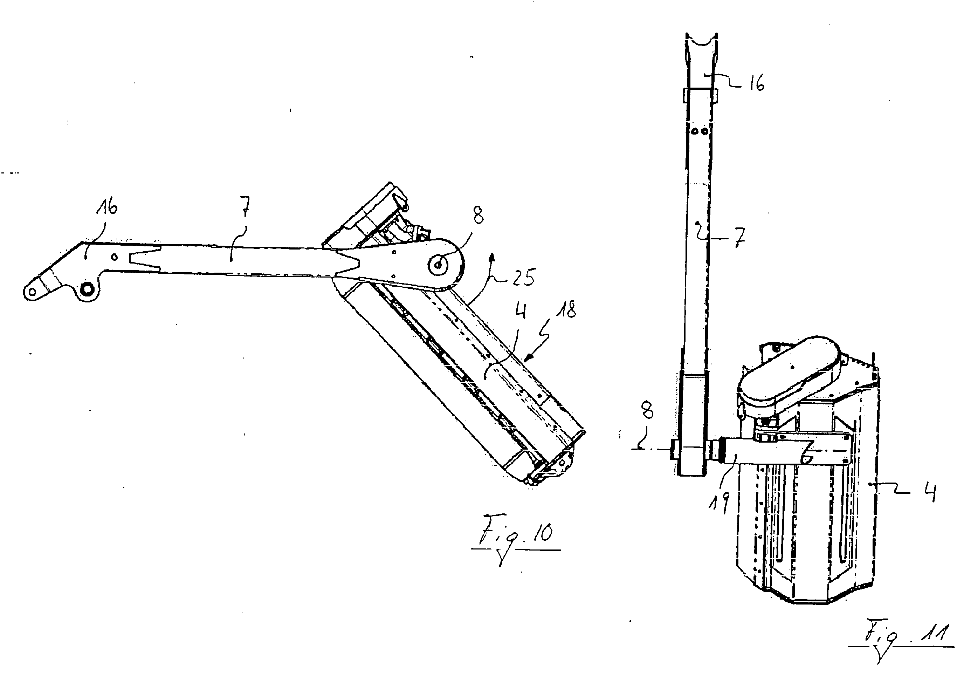

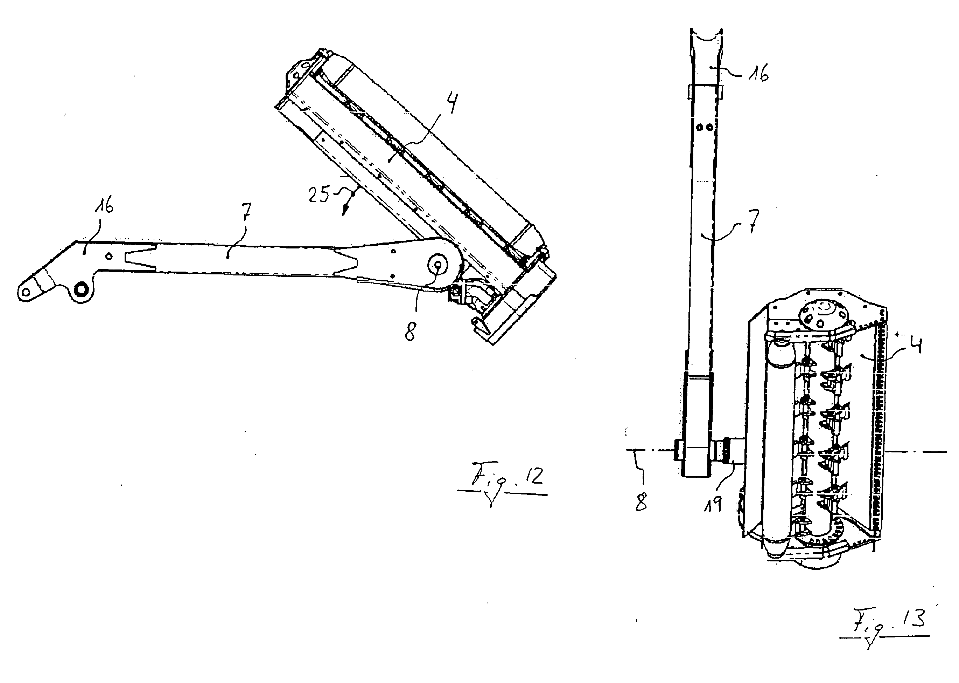

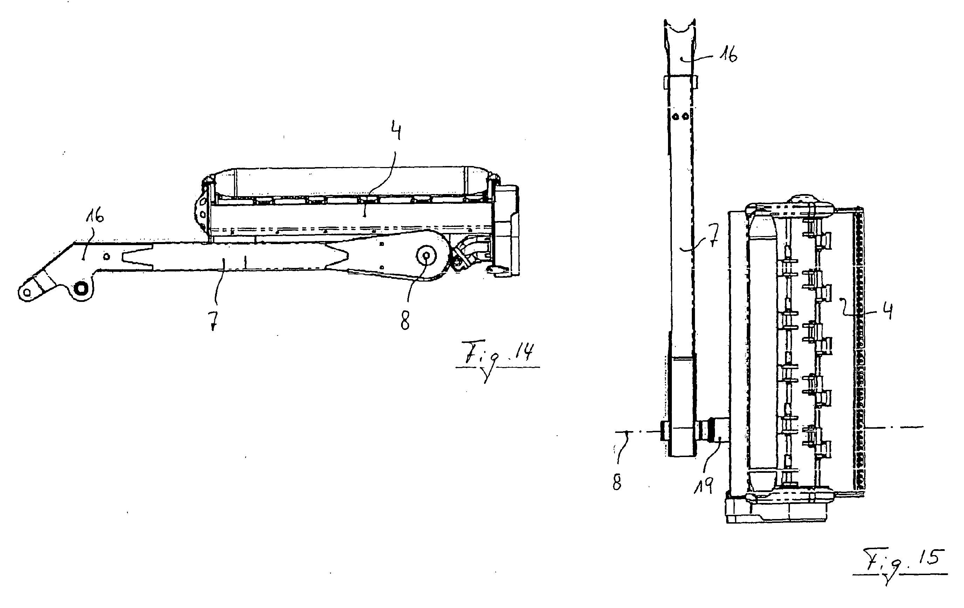

In den Figuren 10, 12 und 14 ist ebenfalls ein Bereich des Aufschwenkens des Mähkopfes 4 gegenüber dem äußeren Arm 7 des Auslegers 3 gezeigt, die in Figur 14 mit der Parallellage von Mähkopf 4 und Arm 7 endet.

An Stelle der beiden Hydraulikzylinder 22, 23 können auch andere Antriebsorgane Verwendung finden. Beispielsweise kommt auch ein Kettentrieb in Betracht, ebenso ein auf der Drehachse 8 sitzender Motor. In jedem Fall sind Schwenkbewegungen in Richtung des Pfeils 25 und solche, die hierzu gegensinnig verlaufen, in mechanisch gleichwertiger Weise bewirkbar.

Die hier verwendeten hydraulischen Elemente zur Ansteuerung der Zylinder 22, 23 sind raumsparend in dem Arm 7 des Auslegers 3 angeordnet.

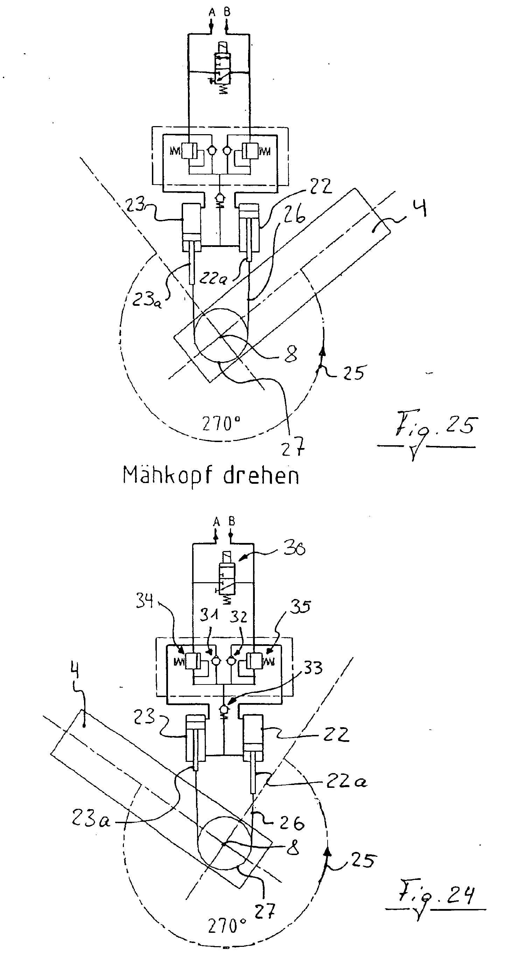

In Figur 24 ist dargestellt, wie eine Zuführungsleitung B in den Zylinder 22 druckmittelbeaufschlagt wird, um dadurch die Kolbenstange 22a auszufahren und gleichzeitig die Kolbenstange 23a einzufahren. Damit läßt sich eine Kraft entgegen dem Pfeil 25 aufbringen, so daß der Mähkopf 4 in die in Figur 16 gezeigte extrem eingeschwenkte Stellung verlagert wird.

In Figur 25 sind die Verhältnisse genau umgekehrt: es wird die Zuführungsleitung A in den Kolben 23 druckmittelbeaufschlagt. Die Kolbenstange 23a fährt aus; gleichzeitig fährt die Kolbenstange 22a ein, und Druckmittel fließt über die Leitung B in den Tank zurück. Es wird dadurch über das Zugseil 26 und den Rotationskörper 27 somit ein Drehmoment bezüglich der Achse 8 aufgebracht, das eine Verschwenkung des Mähkopfes 4 bis in die Stellung nach Figur 25, die Figur 18 entspricht, bewirkt.

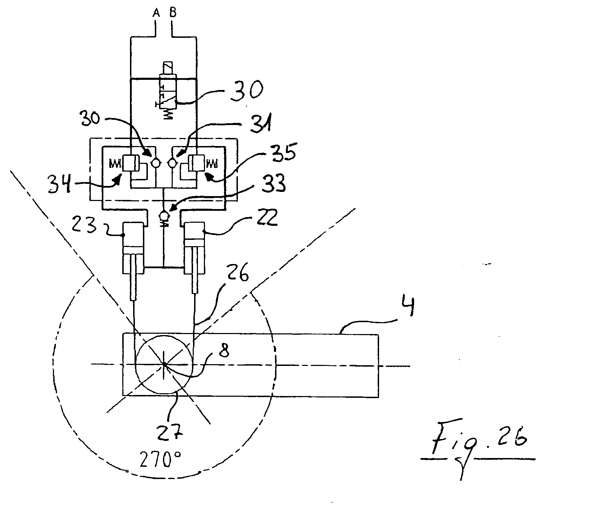

Es ist des weiteren eine schwimmende Lagerung des Mähkopfes 4 möglich (Fig. 26). Hierbei wird das Ventil 30 auf Durchschaltung zwischen den beiden Zylindern 22, 23 geschaltet. Die Kolbenstangen 22a, 23a sind somit frei beweglich, der Mähkopf 4 kann von der Topographie des Bodens geführt werden.

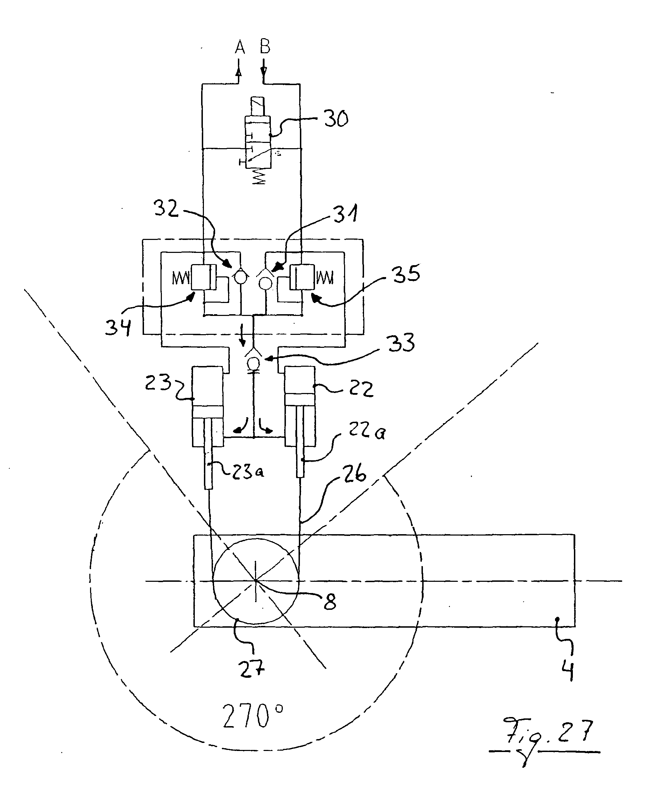

In Figur 27 ist eine Spannfunktion für das Zugseil 26 dargestellt: Durch Druckmittelbeaufschlagung der Leitung B wird bei geöffnetem Rückschlagventil 31 und weiter geöffnetem Sicherheitsventil 33 eine gleichmäßige Beaufschlagung beider Kolben der Zylinder 22, 23 derart vorgenommen, daß die Kolbenstangen 22a, 23a im Einfahrsinn beaufschlagt werden und somit gleichmäßig das Zugseil 26 straffen, ohne ein Drehmoment auf den Mähkopf 4 auszuüben. Diese Funktion kann vor jeder Bestätigung einer Mähkopfverschwenkung durchgeführt werden. Insbesondere kann sie am Beginn eines Arbeitszyklus, wenn das Mähgerät 1 eingeschaltet wird, durchgeführt werden. Durch die Vorspannung der Zylinder 22, 23 ist der Rotationskörper in jeder Winkelstellung spielfrei bezüglich der Drehung um die Achse 8.

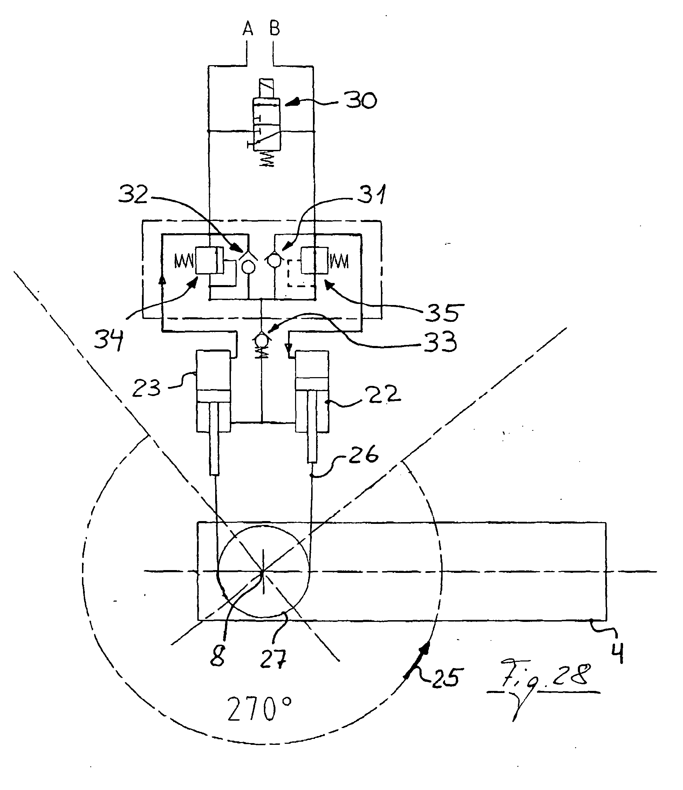

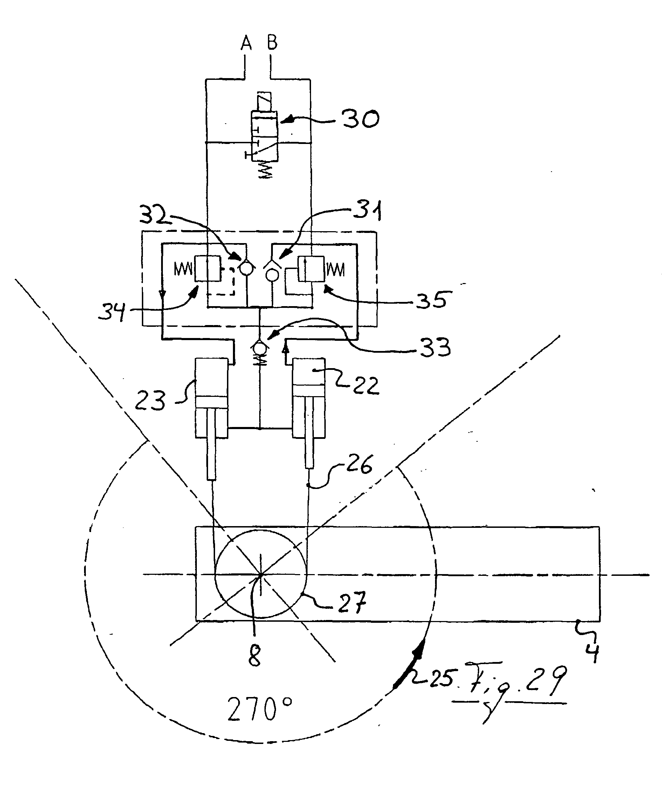

Die Schaltung nach den Figuren 28 und 29, die gleichwertig zueinander sind, dient als Sicherung gegen eine Überlastung durch äußere Krafteinwirkung. Wenn etwa der Mähkopf 4 unter einer Leitplanke oder dergleichen Hindernis liegt und von dort aus gegen das Hindernis geschwenkt wird, wirkt durch dieses eine Kraft entgegen der Richtung des Pfeils 25 ein. Dadurch wird über die Umlenkrolle 27 und das Zugseil 26 der Kolben des Zylinders 22 im Ausfahrsinn mit Kraft beaufschlagt, was jedoch gerade der Schwenkbewegung in Richtung des Pfeils 25 widerspricht. Um Schäden zu vermeiden, wird das Ventil 35 auf Durchlaß geschaltet, ebenso das Rückschlagventil 32 geöffnet. Damit kann die Kolbenbodenseite des Zylinders 23 mit der Kolbenbodenseite des Zylinders 22 verbunden werden. Es wird in den Zylinder 22 auf diese Weise Öl nachgeführt, wodurch die Kolbenstange 22a ausfahren kann und gleichzeitig die Kolbenstange 23a des Zylinders 23 einfährt.

Umgekehrt sind die Verhältnisse in Figur 29 dargestellt: Wird der Mähkopf 4 von oben auf ein Hindernis geschwenkt, öffnen die Ventile 31 und 34, so daß auch hier beide Kolbenbodenseiten miteinander verbunden sind.

Sämtliche Ventile 30 bis 35 können in einer Einheit in dem Arm 7 im Nahbereich der Zylinder 22, 23 angeordnet sein.

Insgesamt kann die Mähvorrichtung 9 somit als kompakte und modulare Einheit ausgebildet sein.

## Patentansprüche

1. Mäh- und/oder Schneidgerät mit einem sich von einem Fahrzeug (2) in Betriebsstellung auswärts erstreckenden, beweglichen Ausleger (3), an dem ein Mähkopf (4) schwenkbeweglich halterbar ist, wobei die Schwenkhalterung des Mähkopfes (4) am Ausleger (3) gestängefrei ausgebildet ist und wobei der Mähkopf (4) vor oder hinter der Erstreckungsebene (21) des Auslegers (3) liegt,
**dadurch gekennzeichnet,**
**daß** zur Bewirkung der Schwenkbewegung zwei gleichartige, im jeweiligen Schwenksinn eine Zugkraftbeaufschlagung bewirkende Antriebsorgane (22;23) vorgesehen sind.

2. Mäh- und/oder Schneidgerät nach Anspruch 1,
**dadurch gekennzeichnet,**
**daß** der Mähkopf (4) ohne Ausbildung eines Schwenkhebels an dem Schwenkgelenk (8) gehalten ist.

3. Mäh- und/oder Schneidgerät (1) mit einem sich von einem Fahrzeug (2) in Betriebsstellung auswärts erstreckenden, beweglichen Ausleger (3), an dem ein Mähkopf (4) schwenkbeweglich halterbar ist, insbesondere nach einem der Ansprüche 1 oder 2,
**dadurch gekennzeichnet,**
**daß** ein äußerer Arm (7) des Auslegers (3) zwei Antriebsorgane (22;23) umfaßt, mit denen zumindest über einen Teilbereich des von dem Mähkopf (4) gegenüber einem äußeren Arm (7) des Auslegers (3) beschriebenen Kreisbogens zueinander gegensinnige Schwenkbewegungen des Mähkopfes (4) in mechanisch gleichwertiger Weise bewirkbar sind.

4. Mäh- und/oder Schneidgerät nach einem der Ansprüche 1 bis 3,
**dadurch gekennzeichnet,**
**daß** im wesentlichen parallel zu dem dem Mähkopf (4) zugewandten Ende (7) des Auslegers (3) und parallel zueinander zwei Hydraulikzylinder (22;23) angeordnet sind, deren Kolbenstangen (22a;23a) jeweils mit einem flexiblen Zugglied (26) verbunden sind.

5. Mäh- und/oder Schneidgerät nach einem der Ansprüche 1 bis 4,
**dadurch gekennzeichnet,**
**daß** der dem Mähkopf zugewandte Arm (7) des Auslegers (3) um eine die Schwenkachse (8) des Mähkopfes, (4) gegenüber dem Ausleger (3) umfassende Ebene (24) spiegelsymmetrisch ausgebildet ist.

6. Mäh- und/oder Schneidgerät nach einem der Ansprüche 1 bis
**dadurch gekennzeichnet,**
**daß** der Mähkopf (4) in einer Transportstellung in einer im wesentlichen vertikalen Stellung halterbar ist.

7. Mäh- und/oder Schneidgerät nach Anspruch 6,
**dadurch gekennzeichnet,**
**daß** der Mähkopf (4) in einer im wesentlichen vertikalen Stellung mit nach außen gewandten schneid- oder Schlagmitteln einer Wartung zugänglich ist.

8. Mäh- und/oder Schneidgerät nach einem der Ansprüche 1 bis 7,
**dadurch gekennzeichnet,**
**daß** die Schwenkachse (8) für den Mähkopf (4) von einem mit diesem beweglichen Rotationskörper (27) umgeben ist.

9. Mäh- und/oder Schneidgerät nach Anspruch 8,
**dadurch gekennzeichnet,**
**daß** der Rotationskörper (27) über seinen Umfang eine Lauffläche für ein Zugglied (26), insbesondere eine Kette oder ein Zugseil, umfaßt.

10. Mäh- und/oder Schneidgerät nach Anspruch 9,
**dadurch gekennzeichnet,**
**daß** das Zugseil (26) als Drahtseil ausgebildet ist.

11. Mäh- und/oder Schneidgerät nach einem der Ansprüche 8 bis 10,
**dadurch gekennzeichnet,**
**daß** das Zugglied (26) den Rotationskörper (27) zumindest einmal vollständig umlaufend umgibt.

12. Mäh- und/oder Schneidgerät nach einem der Ansprüche 1 bis 11,
**dadurch gekennzeichnet,**
**daß** für eine schwimmende Halterung des Mähkopfes, (4) die beiden Antriebsorgane (22;23) miteinander kraftfrei verschaltbar sind.

13. Mäh- und/oder Schneidgerät nach einem der Ansprüche 1 bis 12,
**dadurch gekennzeichnet,**
**daß** die Schwenkgeschwindigkeit des Mähkopfes (4) gegenüber dem äußeren Arm (7) des Auslegers (3) über den gesamten Schenkwinkel konstant ist.

14. Mäh- und/oder Schneidgerät nach einem der Ansprüche 10 bis 13,
**dadurch gekennzeichnet,**
**daß** das Zugseil durch Vorspannung der Zylinder (22;23) ständig gespannt und der Rotationskörper (27) somit spielfrei gehalten ist.

## Claims

1. A mowing and/or cutting apparatus (1) with a movable boom arm (3) which extends outwards from a vehicle (2) in the operating position, on which arm a mower head (4) can be held in pivoting manner, the pivoting holding of the mower head (4) on the boom arm (3) being designed to be free from rods and the mower head (4) lying in front of or behind the plane of extension (21) of the boom arm (3), **characterised in that** two drive elements (22; 23) of the same type which effect an application of tensile force in the respective direction of pivoting are provided for effecting the pivoting movement.

2. A mowing and/or cutting apparatus according to Claim 1, **characterised in that** the mower head (4) is held on the pivot joint (8) without forming a pivot lever.

3. A mowing and/or cutting apparatus (1) with a movable boom arm (3) which extends outwards from a vehicle (2) in the operating position, on which arm a mower head (4) can be held in pivoting manner, in particular according to one of Claims 1 or 2, **characterised in that** an outer arm (7) of the boom arm (3) comprises two drive elements (22; 23), with which at least over a partial region of the arc of a circle described by the mower head (4) with respect to an outer arm (7) of the boom arm (3) pivoting movements of the mower head (4) which are in opposite directions to one another can be brought about in a mechanically equivalent manner.

4. A mowing and/or cutting apparatus according to one of Claims 1 to 3, **characterised in that** two hydraulic cylinders (22; 23) are arranged substantially parallel to the end (7) of the boom arm (3) which faces the mower head (4) and in parallel to one another, the piston rods (22a; 23a) of which cylinders are each connected to a flexible tension member (26).

5. A mowing and/or cutting apparatus according to one of Claims 1 to 4, **characterised in that** the arm (7) of the boom arm (3) which faces the mower head is designed to be mirror-symmetrical about a plane (24) comprising the pivot axis (8) of the mower head (4) relative to the boom arm (3).

6. A mowing and/or cutting apparatus according to one of Claims 1 to 5, **characterised in that** the mower head (4) can be held in a transport position in a substantially vertical position.

7. A mowing and/or cutting apparatus according to Claim 6, **characterised in that** the mower head (4) is accessible for maintenance in a substantially vertical position with outward-facing cutting or beating means.

8. A mowing and/or cutting apparatus according to one of Claims 1 to 7, **characterised in that** the pivot axis (8) for the mower head (4) is surrounded by a rotary body (27) which is movable therewith.

9. A mowing and/or cutting apparatus according to Claim 8, **characterised in that** the rotary body (27) comprises over its periphery a running surface for a tension member (26), in particular a chain or a traction cable.

10. A mowing and/or cutting apparatus according to Claim 9, **characterised in that** the tension member (26) is in the form of a wire cable.

11. A mowing and/or cutting apparatus according to one of Claims 8 to 10, **characterised in that** the tension member (26) surrounds the rotary body (27), running at least once completely round it.

12. A mowing and/or cutting apparatus according to one of Claims 1 to 11, **characterised in that** the two drive elements (22; 23) can be connected together in force-free manner for floating holding of the mower head (4).

13. A mowing and/or cutting apparatus according to one of Claims 1 to 12, **characterised in that** the pivoting speed of the mower head (4) relative to the outer arm (7) of the boom arm (3) is constant over the entire pivoting angle.

14. A mowing and/or cutting apparatus according to one of Claims 10 to 13, **characterised in that** the traction cable is constantly tensioned by pre-tensioning the cylinders (22; 23) and the rotary body (27) is thus kept free of play.

## Revendications

1. Appareil de fauchage et/ou de coupe, comprenant un bras mobile (3) s'étendant vers l'extérieur depuis un véhicule (2), lorsqu'il est en position de travail, et sur lequel est maintenue de façon pivotante une tête de fauchage (4), le montage pivotant de la tête de fauchage (4) sur le bras (3) étant réalisé sans tringlerie, et la tête de fauchage (4) se situant devant ou derrière le plan d'extension (21) du bras (3),
**caractérisé en ce que**,
pour effectuer le mouvement de pivotement, deux organes d'entraînement équivalents (22, 23) sont prévus, qui appliquent chacun un effort de traction dans le sens de pivotement correspondant.

2. Appareil de fauchage et/ou de coupe selon la revendication 1,
**caractérisé en ce que**
la tête de fauchage (4) est maintenue sur l'articulation de pivotement (8) sans formation d'un levier de pivotement.

3. Appareil de fauchage et/ou de coupe (1), comprenant un bras mobile (3) s'étendant vers l'extérieur depuis un véhicule (2), lorsqu'il est en position de travail, et sur lequel est maintenue de façon pivotante une tête de fauchage (4), en particulier selon l'une des revendications 1 ou 2,
**caractérisé en ce**
**qu'**un avant-bras extérieur (7) du bras (3) comprend deux organes d'entraînement (22; 23) à l'aide desquels des mouvements de pivotement mutuellement antagonistes de la tête de fauchage (4) peuvent être provoqués de façon mécaniquement équivalente, sur au moins une partie de l'arc de cercle décrit par la tête de fauchage (4) par rapport à un avant-bras extérieur (7) du bras (3).

4. Appareil de fauchage et/ou de coupe selon l'une des revendications 1 à 3,
**caractérisé en ce que**
deux vérins hydrauliques (22; 23) sont disposés essentiellement parallèlement à l'extrémité (7) du bras (3), qui est tournée vers la tête de fauchage (4), et parallèlement l'un à l'autre, vérins dont les tiges de piston (22a; 23a) sont reliées chacune à un élément de traction flexible (26).

5. Appareil de fauchage et/ou de coupe selon l'une des revendications 1 à 4,
**caractérisé en ce que**
l'avant-bras (7) du bras (3), qui est tourné vers la tête de fauchage, est configuré de façon symétrique en miroir par rapport à un plan (24) contenant l'axe de pivotement (8) de la tête de fauchage (4) par rapport au bras (3).

6. Appareil de fauchage et/ou de coupe selon l'une des revendications 1 à 5,
**caractérisé en ce que**
la tête de fauchage (4) peut être maintenue dans une position essentiellement verticale, lorsqu'elle se trouve dans une position de transport.

7. Appareil de fauchage et/ou de coupe selon la revendication 6,
**caractérisé en ce que**
la tête de fauchage (4) est accessible pour un entretien lorsqu'elle se trouve dans une position essentiellement verticale, les outils de coupe ou fléaux tournés vers l'extérieur.

8. Appareil de fauchage et/ou de coupe selon l'une des revendications 1 à 7,
**caractérisé en ce que**
l'axe de pivotement (8) de la tête de fauchage (4) est entouré par un corps de rotation (27) mobile avec celle-ci.

9. Appareil de fauchage et/ou de coupe selon la revendication 8,
**caractérisé en ce que**
le corps de rotation (27) comprend, s'étendant sur toute sa périphérie, une surface d'enroulement pour un membre de traction (26), en particulier une chaîne ou un câble de traction.

10. Appareil de fauchage et/ou de coupe selon la revendication 9,
**caractérisé en ce que**
le câble de traction (26) est réalisé sous forme d'un câble de fils métalliques.

11. Appareil de fauchage et/ou de coupe selon l'une des revendications 8 à 10,
**caractérisé en ce que**
le membre de traction (26) s'enroule au moins une fois en un tour complet autour du corps de rotation (27).

12. Appareil de fauchage et/ou de coupe selon l'une des revendications 1 à 11,
**caractérisé en ce que**
pour assurer un maintien flottant de la tête de fauchage (4), les deux organes d'entraînement (22; 23) peuvent être mis en communication l'un avec l'autre sans transmission de forces.

13. Appareil de fauchage et/ou de coupe selon l'une des revendications 1 à 12,
**caractérisé en ce que**
la vitesse de pivotement de la tête de fauchage (4) par rapport à l'avant-bras extérieur (7) du bras (3) reste constante sur tout l'angle de pivotement.

14. Appareil de fauchage et/ou de coupe selon l'une des revendications 10 à 13,
**caractérisé en ce que**
le câble de traction est tendu en permanence grâce à une précontrainte exercée par les vérins (22; 23), et que le corps de rotation (27) est, de ce fait, maintenu sans jeu.
